Europäisches Patentamt

European Patent Office

Office européen des brevets

(19)

(11) Numéro de publication: **0 012 884**

**B1**

(12) **FASCICULE DE BREVET EUROPEEN**

(45) Date de publication du fascicule du brevet: **05.05.82**

(51) Int. Cl.³: **H 04 L 25/03, H 04 L 7/10**

(21) Numéro de dépôt: **79104882.0**

(22) Date de dépôt: **04.12.79**

(54) **Procédé et dispositif pour détecter une séquence pseudo-aléatoire de deux symboles dans un récepteur de données utilisant une modulation à double bande latérale-porteuse en quadrature.**

(30) Priorité: **20.12.78 FR 7836581**

(43) Date de publication de la demande:
**09.07.80 Bulletin 80/14**

(45) Mention de la délivrance du brevet:
**05.05.82 Bulletin 82/18**

(84) Etats contractants désignés:
**DE FR GB**

(56) Documents cités:
**FR - A - 2 352 456**
**GB - A - 1 521 029**

(73) Titulaire: **International Business Machines Corporation**
**Armonk, N.Y. 10504 (US)**

(72) Inventeur: **Godard, Dominique Noel**
**Villa l'Ormeau de Barnarac**
**F-06650 Le Rouret (FR)**

(74) Mandataire: **de Pena, Alain**
**COMPAGNIE IBM FRANCE Departement de Propriété Industrielle**
**F-06610 La Gaude (FR)**

Courier Press, Leamington Spa, England.

Procédé et dispositif pour détecter une séquence pseudo-aléatoire de deux symboles dans un
récepteur de données utilisant une modulation à double bande latérale-porteuse
en quadrature

## DESCRIPTION
### Domaine Technique

La présente invention concerne les détecteurs de séquence particulière utilisés dans les récepteurs des systèmes de transmission de données qui utilisent une modulation à double bande latérale-porteuses en quadrature. L'invention concerne plus particulièrement un procédé et un dispositif pour détecter l'instant où est reçu le début d'une séquence pseudo-aléatoire de symboles appartenant à un premier ensemble de deux symboles lorsque cette séquence est précédée par une séquence de symboles constitué par des alternances successives entre deux symboles appartenant à un second ensemble de deux symboles, les premier et second ensembles étant tels que le début de la séquence pseudo-aléatoire crée une inversion de la phase des composantes du spectre de fréquence de la séquence d'alternances.

La présente invention est particulièrement utile pour détecter la séquence d'initialisation d'égaliseur recommandée par l'avis V29 du CCITT.

Le terme modulation à double bande latérale-porteuses en quadrature (DSB—QC) désigne la classe de techniques de modulation qui comprend la modulation par saut de phase, la modulation par saut de phase et d'amplitude, et la modulation d'amplitude en quadrature.

### Etat de la technique antérieure

Dans les systèmes de transmission de données utilisant une modulation DSB—QC, la séquence de bits à transmettre est tout d'abord divisée en groupes de Q bits et on fait correspondre à chacun de ces groupes un de $2^Q$ nombres complexes, ou symboles complexes. Ces symboles sont ensuite transmis un par un à des instants régulièrement espacés de T secondes, appelés instants de signalisation. Chaque symbole est transmis en faisant correspondre respectivement à ses parties réelle et imaginaire une valeur d'amplitude donnée de chacune de deux ondes porteuses en quadrature. Ces deux ondes porteuses sont ensuite combinées et appliquées à l'entrée du canal de transmission.

Le rôle du canal de transmission est de délivrer à sa sortie connectée à un récepteur de données un signal aussi semblable que possible à celui qui a été appliqué à son entrée. Pour des raisons essentiellement économiques on utilise le plus souvent des lignes téléphoniques comme canal de transmission. Or, si les lignes téléphoniques sont bien adaptées pour transmettre correctement la parole, elles ne permettent pas de transmettre des données numériques à des vitesses supérieures ou égales à 4800 bits par seconde avec une très faible probabilité d'erreur. En effet, ces lignes introduisent des perturbations qui affectent la qualité des signaux pendant leur transmission, et qui rendent difficile une détection correcte des données transmises. Ces perturbations comprennent principalement des distorsions d'amplitude et de phase qui provoquent une interaction entre les signaux successivement transmis, connue sous le nom d'interférence intersymbole. Dans les récepteurs des systèmes de transmission de données à grande vitesse, on utilise généralement en égaliseur automatique adaptatif pour minimiser les effets de l'interférence intersymbole avant de détecter les données.

Le type d'égaliseur adaptatif le plus utilisé dans les systèmes de transmission de données utilisant une modulation DSB—QC est l'égaliseur transversal complexe dont on trouvera un exemple de réalisation dans le brevet français No. 73 26404 publié sous le No. 2 237 379. Dans l'égaliseur décrit dans ce brevet, chacune des composantes en phase et en quadrature du signal reçu est appliquée à l'entrée d'une paire de filtres transversaux et les sorties de ces filtres sont combinées pour générer les composantes en phase et en quadrature du signal égalisé. Les coefficients de ces filtres, qui sont les coefficients de l'égaliseur, sont ajustés automatiquement de façon à satisfaire un critère de performance donné. Avant de transmettre des données, il est nécessaire de faire en sorte que les valeurs des coefficients de l'égaliseur soient aussi proches que possible de valeurs optimales. Pour cela, on prévoi avant la transmission des données une période d'initialisation au cours de laquelle l'émetteur émet une séquence d'initialisation connue à destination du récepteur. Le récepteur compare la séquence d'initialisation reçue avec une séquence d'initialisation de référence générée localement dans le récepteur et identique à la séquence d'initialisation émise, afin d'obtenir un signal d'erreur qui permet l'ajustement initial des coefficients de l'égaliseur à des valeurs aussi proches que possible de valeurs optimales. Les coefficients sont ensuite ajustés continuellement pendant la transmission des données.

Dans un récepteur, l'égaliseur n'est pas le seul dispositif qui droit être convenablement conditionné avant la transmission des données. Il faut notamment établir le détecteur de porteuse et le dispositif de contrôle automatique de gain, puis initialiser le dispositif de récupération d'horloge et enfin initialiser l'égaliseur. C'est pourquoi, avant la transmission des données, on prévoit une période dite de mise en route au cours de laquelle l'émetteur émet une séquence dite de mise en route pour conditionner convenablement l'ensemble des dispositifs du récepteur. Les séquences de mise en route comprennent généralement une séquence de synchronisation pour conditionner le détecteur de porteuse, le dispositif de contrôle automatique de gain, et le dispositif de récupération d'horloge, suivie

**0012 884**

d'une séquence d'initialisation pour initialiser l'égaliseur. On comprendra qu'il est alors nécessaire de prévoir dans le récepteur un détecteur de séquence d'initialisation pour détecter l'instant de début de cette séquence et déclencher alors le processus d'initialisation de l'égaliseur.

Le Comité Consultatif International Télégraphique et Téléphonique (CCITT) dans son avis V29, concernant la standardisation des modems 9600 bits par seconde, a recommandé l'utilisation d'une séquence de mise en route qui comprend une séquence de synchronisation qui est une séquence de symboles constituée par des alternances successives entre deux symboles prédéterminés, suivie d'une séquence d'initialisation d'égaliseur constituée par une séquence pseudo-aléatoire de symboles appartenant à un ensemble de deux autres symboles prédéterminés.

La demande de brevet français No. 77 15295 publiée sous le No. 2 352 456 décrit deux procédés pour détecter les séquences de synchronisation et d'initialisation et le passage de la séquence de synchronisation à la séquence d'initialisation dans le cas où la séquence de synchronisation a un spectre de fréquence composé d'une raie à la fréquence de la porteuse et de deux raies symétriques par rapport à cette première raie, et où la séquence d'initialisation a un spectre réparti sur toute la bande de fréquence utilisée pour la transmission des données. Les spectres respectifs des séquences de synchronisation et d'initialisation recommandés par l'avis V29 du CCITT correspondent à ceux définis ci-dessus.

Le premier procédé décrit dans la demande de brevet précitée prévoit l'utilisation d'une filtre passe-bande dont la bande passante est telle que l'énergie à la sortie du filtre est très faible pendant la séquence de synchronisation et augmente fortement à partir du début de la séquence d'initialisation. Une mesure de l'énergie à la sortie du filtre peut permettre de détecter les séquences et le passage d'une séquence à l'autre. Comme mentionné dans la demande de brevet précitée, le procédé ci-dessus présente l'inconvénient que le filtre passe-bande peut amortir les phénomènes transitoires qui se produisent lors du passage d'une séquence à l'autre et fournir alors des indications erronées.

Le second procédé décrit dans la demande de brevet précitée No. 77 15295 prévoit l'utilisation d'un filtre pour extraire du signal reçu la composante à la fréquence de la porteuse, et d'un dispositif pour détecter les passages par zéro de cette composante. La mesure des intervalles de temps séparant les passages par zéro permet de détecter les séquences et la transition entre ces séquences.

Exposé de l'invention

L'objet principal de l'invention est de fournir pour un récepteur de données utilisant une modulation DSB—QC un procédé et un dispositif pour détecteur une séquence aléatoire de symboles appartenant à un premier ensemble de deux symboles prédéterminés lorsque cette séquence est précédée par une séquence de symboles constituée par des alternances successives entre deux symboles appartenant à un second ensemble, qui soient précis et insensibles aux bruits.

Un autre objet de l'invention est de fournir un procédé et un dispositif pour détecter la-séquence d'initialisation d'égaliseur recommandée par l'avis V29 du CCITT.

Ces objets et d'autres sont atteints d'une manière générale par l'invention qui permet, dans un récepteur pour un système de transmission de données utilisant une modulation DSB—QC, de détecter l'instant de début d'une séquence pseudo-aléatoire de symboles appartenant à un premier ensemble de deux symboles lorsque cette séquence est précédée par une séquence de symboles constituée par des alternances successives entre deux symboles appartenant à un second ensemble de deux symboles, les premier et second ensembles étant tels que le début de la séquence pseudo-aléatoire crée une inversion de la phase des composantes du spectre de fréquence de la séquence d'alternances. Selon le procédé de l'invention, on démodule le signal reçu, on détermine la composante continue du signal reçu démodulé, et on mesure l'énergie de cette composante continue. L'instant où cette énergie chute au-dessous de sa valeur moyenne est indicatif du début de la séquence pseudo-aléatoire. Selon un aspect de l'invention, on détermine la composante continue du signal reçu démodulé, en filtrant passe-bas le signal reçu démodulé.

L'invention propose également un dispositif pour mettre en oeuvre le procédé de l'invention. Selon un mode de réalisation préféré de l'invention, les filtres passe-bas sont réalisés en utilisant l'égaliseur complexe du récepteur.

Brève description des figures

D'autres objets, caractéristiques et avantages de la présente invention ressortiront mieux de l'exposé qui suit, fait en référence aux dessins annexés à ce texte, qui représentent un mode de réalisation préféré de celle-ci.

La figure 1 représente le bloc diagramme d'un récepteur DSB—QC incorporant l'invention.

La figure 2 représente le bloc diagramme du détecteur de séquence conforme à l'invention.

La figure 3 représente un mode de réalisation préféré des filtres passe-bas du détecteur de séquence de l'invention.

La figure 4 représente un exemple de réalisation du générateur de séquence de référence.

Mode de réalisation préfère de l'invention

L'invention concerne d'une manière générale un procédé et un dispositif pour détecter le début

3

**0 012 884**

d'une séquence pseudo-aléatoire de symboles appartenant à un premier ensemble de deux symboles lorsque cette séquence est précédée par une séquence de symboles constituée par des alternances successives entre deux symboles appartenant à un second ensemble de deux symboles, les premier et second ensembles étant tels que le début de la séquence pseudo-aléatoire crée une inversion de la phase des composantes du spectre de la séquence d'alternances. Cependant, dans un souci de clarté et sans pour autant nuire à la généralité de l'invention, on décrira son application à la détection de la séquence d'initialisation d'égaliseur recommandée par l'avis V29 du CCITT.

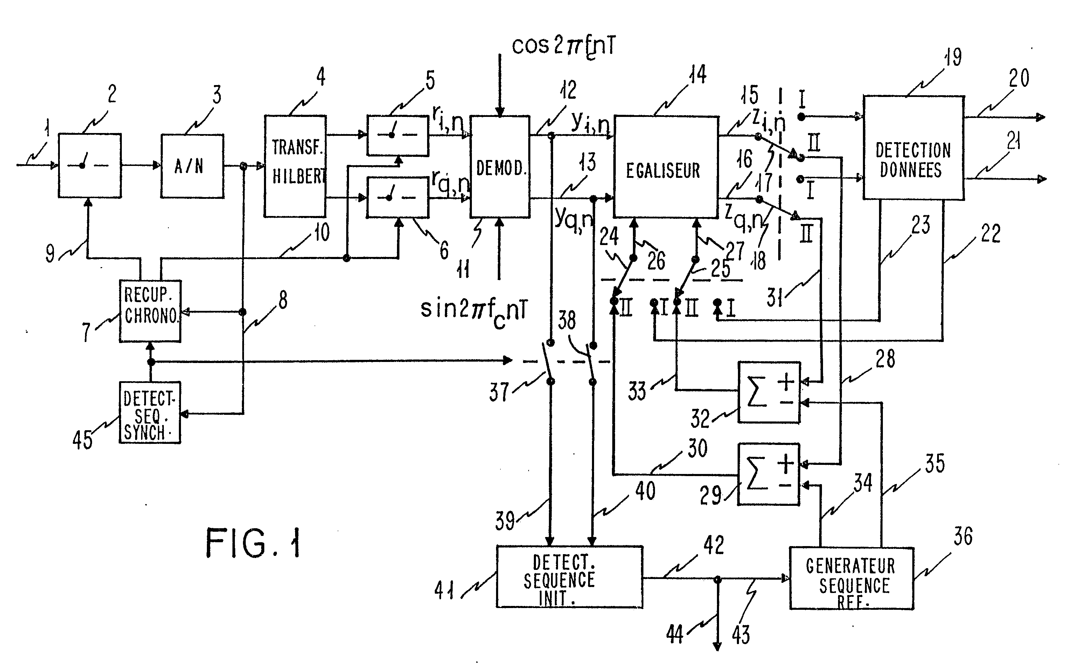

Pour situer l'invention dans son contexte, on a représenté sur la figure 1 le bloc diagramme typique d'un récepteur DSB—QC 9600 bits par seconde conforme à l'avis V29 du CCITT et incorporant le détecteur de séquence de l'invention. Le signal reçu du canal de transmission, dont l'énergie a été normalisée par un circuit de contrôle automatique de gain (non représenté) et qui a été filtré par un filtre passe bande (non représenté) qui rejette le bruit hors bande, est appliqué par une ligne 1 à un dispositif d'échantillonnage 2 dans lequel il est échantillonné à la cadence $1/\tau$. La cadence $1/\tau$ est choisie égale à un multiple m/T de la cadence de signalisation 1/T de façon à ce que l'on dispose à la sortie du dispositif 2 d'un nombre d'échantillons suffisant pour bien définir le signal reçu. La valeur de l'amplitude de ces échantillons est convertie en numérique dans un convertisseur-analogique-numérique 3 et appliquée à l'entrée d'un transformateur de Hilbert numérique 4.

Un transformateur de Hilbert est un dispositif qui a une entrée et deux sorties et qui fournit respectivement à ses deux sorties les composantes en phase et en quadrature du signal appliqué à son entrée. On en trouvera un exemple de réalisation numérique dans l'article "Theory and Implementation of the Discrete Hilbert Transform", paru dans "Digital Signal Processing", L. R. Robiner et C. M. Rader, 1972 IEEE Press.

Les composantes en phase et en quadrature du signal reçu, fournies par le transformateur de Hilbert 4 sont respectivement ré-échantillonnées à la cadence de signalisation 1/T par deux dispositif d'échantillonnage 5 et 6. Un dispositif de récupération de chronologie 7 a son entrée reliée par une ligne 8 à la sortie du convertisseur analogique-numérique 3 et commande le dispositif d'échantillonnage 2, par une ligne 9, les dispositifs d'échantillonnage 5 et 6 par une ligne 10 et tous les autres composants du récepteur par des lignes non représentées. On trouvera un exemple de réalisation d'un tel dispositif de récupération de chronologie dans le brevet français No. 75 14020 déposé par la demanderesse le 25 avril 1975 et publié sous le No. 2 309 089. Les composantes en phase et en quadrature du signal reçu, disponibles respectivement à la sortie des dispositifs d'échantillonnage 5 et 6, sont appliquées aux entrées d'un démodulateur complexe 11. Le démodulateur 11 reçoit d'une source locale non représentée une porteuse en phase de la forme cos $2\pi f_c nT$, et une porteuse en quadrature de la forme sin $2\pi f_c nT$; $f_c$ étant la fréquence de la porteuse et n un nombre entier positif qui varie de zéro à l'infini. Si on désigne par $r_n$ le signal reçu à l'instant de signalisation nT, ses composantes en phase et en quadrature disponibles respectivement à la sortie des dispositifs d'échantillonnage 5 et 6 peuvent s'exprimer par $r_{i,n}$ et $r_{q,n}$ respectivement. Le démodulateur 11 fournit sur les lignes 12 et 13 les composantes en phase et en quadrature, respectivement $y_{i,n}$ et $y_{q,n}$ du signal reçu démodulé $y_n$, conformément aux relations connues:

$$y_{i,n} = r_{i,n} \cos \omega_c t + r_{q,n} \sin \omega_c t \tag{1}$$

$$y_{q,n} = -r_{i,n} \sin \omega_c t + r_{q,n} \cos \omega_c t \tag{2}$$

Les composantes en phase et en quadrature du signal reçu démodulé, disponibles sur les lignes 12 et 13, sont appliquées aux entrées d'un égaliseur transversal complexe adaptatif 14 dont on trouvera un exemple de réalisation dans le brevet français No. 73 26404 déposé par la demanderesse le 12 juillet 1973 et publié sous le No. 2 237 379.

Les composantes en phase et en quadrature du signal égalisé sont respectivement appliquées par des lignes 15 et 16 à l'entrée commune de deux commutateurs à deux positions 17 et 18. Les positions I des commutateurs 17 et 18 sont reliées aux entrées d'un système de détection de données 19 qui fournit respectivement sur des lignes 20 et 21 les composantes en phase et en quadrature des symboles de données détectés. Le système 19 fournit en outre sur des lignes 22 et 23 les composantes en phase et en quadrature d'un signal d'erreur représentatif de l'écart entre les composantes du signal égalisé et celles du symbole de données détecté correspondant. On trouvera un exemple de réalisation d'un système de détection de données dans le brevet français No. 74 43560 déposé par la demanderesse le 27 décembre 1974 et publié sous le No. 2 296 322. Les lignes 22 et 23 sont reliées respectivement à la position I de deux commutateurs à deux positions 24 et 25 dont les sorties communes sont reliées respectivement à l'égaliseur 14 par des lignes 26 et 27. La position II du commutateur 17 est reliée par une ligne 28 à l'entrée (+) d'un soustracteur 29 dont la sortie est reliée à la position II du commutateur 24 par une ligne 30. La position II du commutateur 18 est reliée par une ligne 31 à l'entrée (+) d'un soustracteur 32 dont la sortie est reliée à la position II du commutateur 25 par une ligne 33. Les entrées (−) des soustracteurs 29 et 32 sont reliées respectivement par des lignes 34 et 35 à la sortie d'un générateur de séquence d'initialisation de référence 36 qui sera décrit en détail en référence à la figure 4.

4

Les lignes 12 et 13 sont en outre reliées respectivement à travers deux interrupteurs 37 et 38 à deux lignes 39 et 40 qui sont reliées aux entrées d'un détecteur de séquence d'initialisation 41.

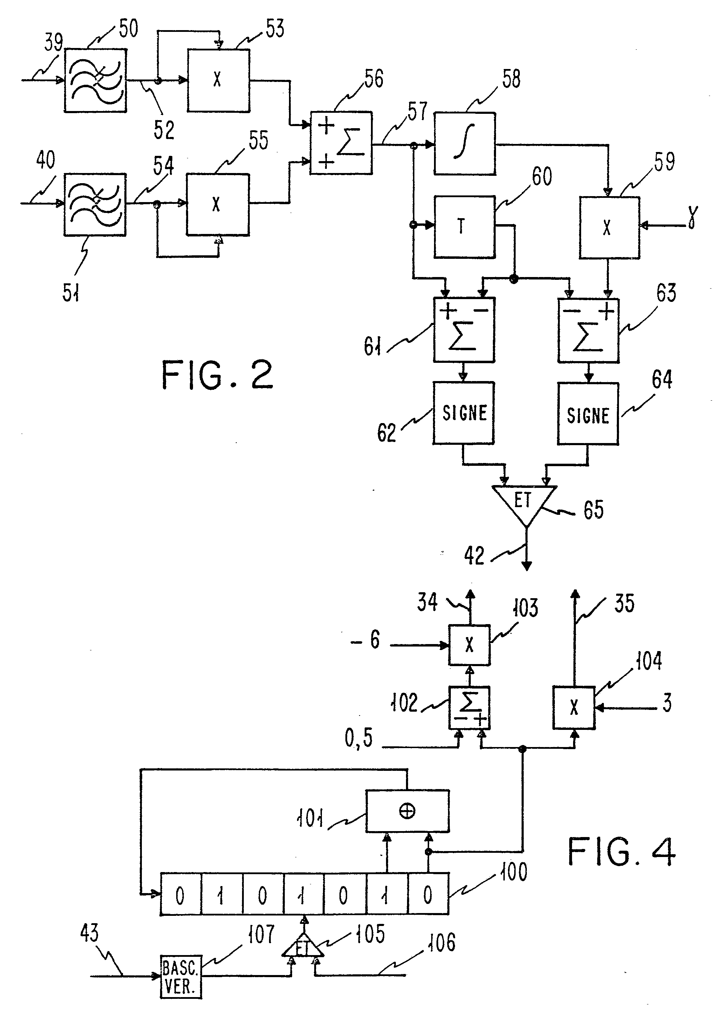

Le détecteur de séquence d'initialisation 41 est un détecteur de séquence conforme à l'invention et sera décrit en détail en référence à la figure 2. Il a sa sortie 42 reliée au générateur 36 par une ligne 43 et aux commutateurs 17, 18, 24 et 25 par une ligne 44.

Un détecteur de séquence de synchronisation 45 a son entrée reliée à la ligne 8 et sa sortie reliée au dispositif de récupération de chronologie 7 et aux interrupteurs 37 et 38. La séquence de synchronisation a un spectre constitué par trois raies spécifiques qui seront définies plus loin, et on pourra utiliser comme détecteur de séquence de synchronisation un détecteur dérivé de celui décrit dans l'IBM Technical Disclosure Bulletin, Vol. 18, No. 8, janvier 1976, pages 2546 et 2547.

En fonctionnement en mode de données, les commutateurs 17, 18, 24 et 25 sont en position I et les interrupteurs 37 et 38 sont ouverts. Le signal reçu dont les composantes en phase et en quadrature sont respectivement disponibles à la sortie des dispositifs d'échantillonnage 5 et 6 est démodulé dans le démodulateur 11, égalisé dans l'égaliseur 14, et les composants en phase et en quadrature du signal égalisé sont appliquées au système de détection 19 à travers les commutateurs 17 et 18 en position I. A chaque instant de signalisation, le système de détection de données 19 fournit sur les lignes 20 et 21 les composantes du symbole détecté, et sur les lignes 22 et 23 les composantes du signal d'erreur. Les composantes de ce signal d'erreur sont appliquées à travers les commutateurs 24 et 25 en position I à l'égaliseur 14 qui en dérive des signaux de commande pour ajuster ses coefficients.

Pendant la période de mise en route, le récepteur reçoit tout d'abord la séquence de synchronisation. Celle-ci est détectée par le détecteur de séquence de synchronisation 45 qui commande entre autre la fermeture des interrupteurs 37 et 38 et le début du processus de synchronisation du dispositif de récupération de chronologie 7 comme décrit en détail dans le brevet précité No. 75 14020. Le récepteur reçoit ensuite la séquence d'initialisation dont le début est détecté par le détecteur de séquence d'initialisation 41 qui fait passer les commutateurs 17, 18, 24 et 25 en position II et initie la génération de la séquence d'initialisation de référence par le générateur 36 qui fournit séquentiellement les symboles de la séquence de référence à la cadence de signalisation.

Le générateur 36 fournit simultanément à chaque instant de signalisation les composantes en phase et en quadrature de chacun des symboles de la séquence de référence sur les lignes 34 et 35. Ces composantes sont retranchées respectivement des composantes en phase et en quadrature du signal égalisé dans les soustracteurs 29 et 32 pour fournir les composantes en phase et en quadrature du signal d'erreur appliqué à l'égaliseur 14. Les composantes en phase et en quadrature du signal d'erreur fournies par les soustracteurs 29 et 32 sont appliquées à l'égaliseur 14 par les lignes 30 et 33 et les commutateurs 24 et 25 en position II.

Pour une meilleure compréhension de l'invention on décrira maintenant le procédé de l'invention appliqué à la détection de la séquence d'initialisation.

La séquence de mise en route recommandée par l'avis V29 du CCITT comprend une séquence de synchronisation qui est une séquence de symboles constituée par des alternances successives entre deux symboles désignés A et B, suivie par une séquence d'initialisation d'égaliseur constituée par une séquence pseudo-aléatoire de symboles choisis parmi un ensemble de deux symboles désignés C et D. La séquence d'initialisation est dérivée d'une séquence pseudo-aléatoire binaire générée par le polynôme

$$1 + x^{-6} + x^{-7}$$

Chaque fois que la séquence binaire générée contient un "zéro" binaire, le symbole C est transmis et chaque fois qu'elle contient un "un" binaire le symbole D est transmis. En outre la séquence d'initialisation commence par la séquence de symboles CDCDCDCD. La séquence de synchronisation a un spectre de fréquence constitué par trois raies situées respectivement aux fréquences $f_c$, $f_1$ et $f_2$ définies par les relations:

$$f_1 = f_c - 1/2T \qquad f_2 = f_c + 1/2T \tag{3}$$

où $f_c$ est la fréquence de la porteuse,
1/T est la cadence de signalisation.

Le spectre de fréquence de la séquence d'initialisation comprend une raie à la fréquence $f_c$ et un grand nombre de raies additionnelles symétriques par rapport à $f_c$. L'ensemble des symboles A et B et l'ensemble des symboles C et D sont tels que le début de la séquence d'initialisation crée une inversion de 180° de la phase des composantes à $f_c$, $f_1$ et $f_2$ de la séquence de synchronisation. Il est ainsi possible de détecter l'instant de début de la séquence d'initialisation en détectant l'inversion de 180° de la phase de la composante à $f_c$ du signal reçu.

L'inversion du 180° de la phase de la composante à $f_c$ du signal reçu crée une chute de l'énergie de cette composante. Une mesure de l'énergie de la composante à $f_c$ permettrait d'en détecter la chute.

Selon l'invention on détecté l'inversion de 180° de la phase de la composante à $f_c$ du signal reçu

5

et par là même l'instant de début de la séquence d'initialisation en détectant la chute de l'énergie de la composante continue du signal reçu démodulé.

On décrira maintenant en détail le dispositif de détection conforme à l'invention en se référant à la figure 2.

Les composantes en phase et en quadrature du signal reçu démodulé sont appliquées respectivement par les lignes 39 et 40 (figure 1) à deux filtres passe-bas 50 et 51. Les sorties des filtres 50 et 51 fournissent deux signaux représentatifs respectivement des composantes continues des composantes en phase et en quadrature du signal reçu démodulé. La sortie du filtre 50 est appliquée par une ligne 52 aux deux entrées d'un multiplicateur 53, et la sortie du filtre 51 est appliquée par une ligne 54 aux deux entrées d'un multiplicateur 55. Les sorties des multiplicateurs 53 et 55 sont sommées dans un additionneur 56 qui fournit à sa sortie l'énergie E de la composante continue du signal reçu démodulé. Tant que le signal reçu est constitué par la séquence de synchronisation, l'énergie E fluctue autour d'une valeur constante que l'on notera $E_o$, et chute considérablement au-dessous de $E_o$ à l'instant de l'inversion de phase, c'est-à-dire au début de la séquence d'initialisation.

Il existe plusieurs moyens pour détecter cette chute d'énergie. On peut par exemple détecter l'instant ou l'énergie atteint sa valeur minimum ou encore détecter l'instant où l'énergie a chuté d'une quantité prédéterminée.

Dans l'exemple de réalisation illustré sur la figure 2, on détecte la chute d'énergie lorsque l'énergie atteint sa valeur minimum.

Si on désigne par E(nT) et E[(n-1)T] l'énergie de la composante continue aux instants de signalisation nT et (n-1)T, on décidera que l'énergie de la composante continue a atteint sa valeur minimum lorsque les deux conditions suivantes sont satisfaites:

$$E\,[(n-1)T] < \gamma\,E_o \tag{4}$$

et

$$E\,(nT) > E\,[(n-1)T] \tag{5}$$

où

$\gamma$ est un facteur de pondération égal, par exemple, à 0,5.

Sur la figure 2, l'énergie à la sortie de l'additionneur 56 est appliquée par une ligne 57 à l'entrée d'un intégrateur 58 qui fournit l'énergie $E_o$. Cette énergie $E_o$ est multipliée par le facteur $\gamma$ dans un multiplicateur 59. La sortie de l'additionneur 56 est en outre appliquée à l'entrée d'un élément de retard 60 qui introduit un retard égal à T sec. Si on désigne par E(nT) l'énergie à l'entrée de l'élément 60 on aura à sa sortie l'énergie E [(n-1)T]. L'entrée et la sortie de l'élément 60 sont reliées respectivement aux sorties (+) et (—) d'un soustracteur 61 qui fournit la quantité

$$E(nT) - E\,[(n-1)T]$$

Un dispositif de détermination de signe 62, connecté à la sortie du soustracteur 61 fournit un niveau haut si la quantité

$$E(nT) - E\,[(n-1)T]$$

est positive, c'est-à-dire si la condition exprimée par la relation (5) est satisfaite.

La sortie de l'élément 60 est en outre reliée à l'entrée (—) d'un soustracteur 63 dont l'entrée (+) est reliée à la sortie du multiplicateur 59. Un dispositif de détermination de signe 64 connecté à la sortie du soustracteur 63 fournit un niveau haut si la quantité

$$\gamma\,E_o - E\,[\,(n-1)T]$$

est positive, c'est-à-dire si la condition exprimée par la relation (4) est satisfaite. Les sorties des dispositifs 62 et 64 sont appliquées aux entrées d'un porte ET 65 qui fournit à sa sortie sur la ligne 42 (figure 1) un niveau haut lorsque les deux conditions exprimées par les relations (4) et (5) sont satisfaites. Le passage au niveau haut de la sortie de la porte ET 65 est indicatif de l'instant de début de la séquence d'initialisation.

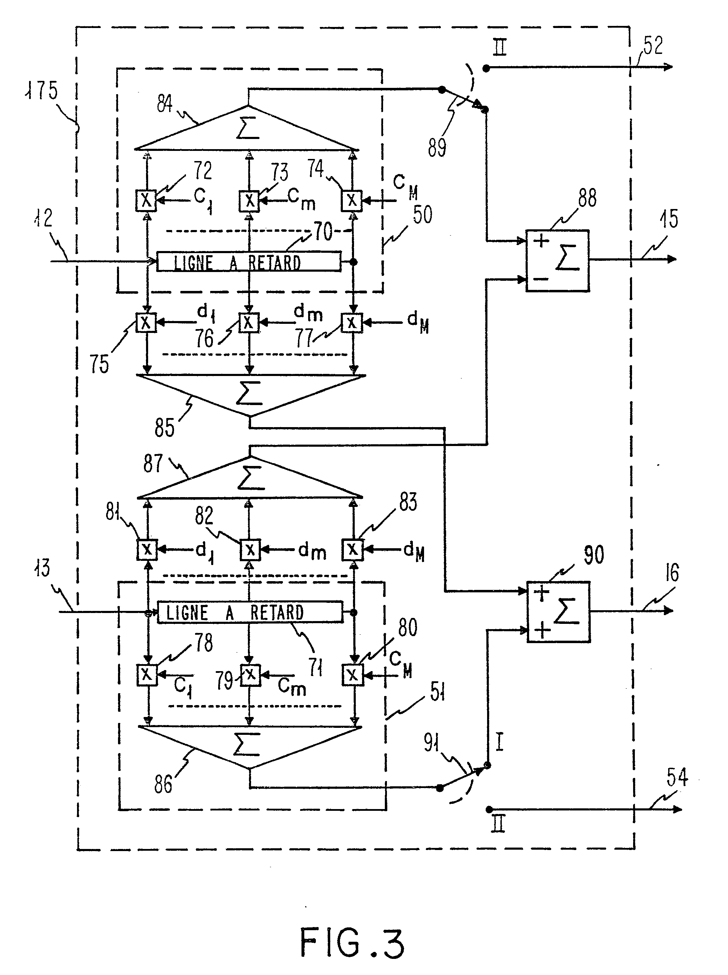

Les filtres passe-bas 50 et 51 peuvent être réalisés avantageusement en utilisant l'égaliseur complexe 14 comme illustré sur la figure 3.

On a représente schématiquement sur la figure 3 l'égaliseur complexe 14 et les moyens qu'il faut lui rajouter pour qu'il puisse être utilisé comme égaliseur en fonctionnement en mode de données et comme filtres passe-bas 50 et 51 pendant la période de mise en route.

L'égaliseur 14 comprend deux lignes à retard à M prises 70 et 71 dont les entrées sont reliées respectivement aux lignes 12 et 13, et dans lesquelles sont emmagasinées respectivement les composantes en phase et en quadrature du signal reçu démodulé. Le retard entre deux prises adjacentes est égal à la période de signalisation T. Les prises de la ligne à retard 70 sont reliées respectivement à une première entrée de M multiplicateurs 72, ..., 73, ..., 74 et à une première entrée de M multiplicateurs 75, ..., 76, ..., 77. Les secondes entrées des multiplicateurs 72, ..., 73,

..., 74 reçoivent respectivement les coefficients $c_1, \ldots, c_m, \ldots, c_M$ alors que les secondes entrées des multiplicateurs 75, ..., 76, ..., 77 reçoivent respectivement les coefficients $d_1, \ldots, d_m, \ldots, d_M$. Les prises de la ligne à retard 71 sont reliées respectivement à une première entrée de M multiplicateurs 78, ..., 79, ..., 80 et à une première entrée de M multiplicateurs 81, ..., 82, ..., 83. Les secondes entrées des multiplicateurs 78, ..., 79, ..., 80 reçoivent respectivement les coefficients $c_1, \ldots, c_m, \ldots, c_M$, alors que les secondes entrées des multiplicateurs 81, ..., 82, ..., 83 reçoivent respectivement les coefficients $d_1, \ldots, d_m, \ldots, d_M$. Les sorties des multiplicateurs 72, ..., 74 sont sommées dans un sommateur 84. Les sorties des multiplicateurs 75, ..., 77 sont sommées dans un sommateur 85. Les sorties des multiplicateurs 78, ..., 80, sont sommées dans un sommateur 86. Les sorties des multiplicateurs 81, ..., 83 sont sommées dans un sommateur 87. La sortie du sommateur 87 est appliquée à l'entrée (−) d'un soustracteur 88 dont la sortie est reliée à la ligne 15 (figure 1). La sortie du sommateur 84 est reliée à l'entrée commune d'un commutateur à deux positions 89. La position I du commutateur 89 est reliée à l'entrée (+) du soustracteur 88 et la position II du commutateur 89 est reliée à la ligne 52 (figure 4). La sortie du sommateur 85 est appliquée à une entrée (+) d'un additionneur 90 dont la sortie est reliée à ligne 16 (figure 1). La sortie du sommateur 86 est reliée à l'entrée commune d'un commutateur à deux positions 91. Les positions I et II du commutateur 91 sont reliées respectivement à l'autre entrée (+) de l'additionneur 90 et à la ligne 54 (figure 2). Les coefficients de l'égaliseur sont ajustés par un dispositif d'ajustement des coefficients non représenté. Pour plus de détails de l'égaliseur en se référera au brevet français No. 73 26404 précité.

En fonctionnement en mode de données, les commutateurs 89 et 91 sont en position I. On a sur les lignes 12 et 13 les composantes en phase et en quadrature $y_{i,n}$ et $Y_{q,n}$ du signal reçu démodulé. On vérifiera qu'on obtient alors sur les lignes 15 et 16 les composantes en phase et en quadrature $z_{i,n}$ et $z_{q,n}$ du signal égalisé conformément aux relations connues

$$z_{i,n} = \sum_{m=1}^{M} y_{i,n-m}\, c_m + \sum_{m=1}^{M} y_{q,n-m} d_m \tag{6}$$

$$z_{q,n} = \sum_{m=1}^{M} y_{i,n-m}\, d_m + \sum_{m=1}^{m} y_{q,n-m} c_m \tag{7}$$

Comme illustré sur la figure 3, l'égaliseur complexe est constitué par quatre filtres transversaux: un premier filtre dont l'entrée est la ligne 12 et la sortie est la sortie du sommateur 84, un second filtre dont l'entrée est encore la ligne 12 et la sortie est la sortie du sommateur 85, un troisième filtre dont l'entrée est la ligne 13 et la sortie est la sortie du sommateur 86, et un quatrième filtre dont l'entrée est la ligne 13 et la sortie est la sortie du sommateur 87. Pendant la période de mise en route, lesdits premier et troisième filtres sont utilisés comme filtres passe-bas 50 et 51 du détecteur de l'invention.

Pendant la période de mise en route, lorsque le détecteur 45 (figure 1) détecte le début de la séquence de synchronisation, il fait commuter les commutateurs 89 et 91 en position II, met à zéro les coefficients $d_1, \ldots, d_m, \ldots, d_M$, et fixe les coefficients $c_1, \ldots, c_m, \ldots, c_M$ à des valeurs telles que lesdits premier et troisième filtres constituent des filtres passe-bas.

On pourra choisir par exemple les valeurs suivantes:

$$c_m = \frac{\sin^2 m\pi/8}{(m\pi/8)^2} \quad m=1, \ldots, M.$$

Les sorties desdits premier et troisième filtres (respectivement les filtres 50 et 51) sont alors disponibles sur les lignes 52 et 54 et traitées comme décrit en référence à la figure 2. Lorsque le détecteur de séquence d'initialisation 41 détecte le début de la séquence d'initialisation, il fait commuter les commutateurs 89 et 91 en position I, et remet à zéro les coefficients $c_1, \ldots, c_m, \ldots, c_M$. Le dispositif illustré sur la figure 3 est alors utilisé comme égaliseur pour la période d'initialisation.

On a représenté sur la figure 4 un exemple de réalisation du générateur de séquence de référence 36 de la figure 1. Le générateur illustré sur la figure 4 est conforme à l'avis V29 du CCITT. Il comprend un registre à décalage à sept étages 100. Les sorties de sixième et septième étages sont reliées aux entrées d'un circuit OU Exclusif 101 dont la sortie est reliée à l'entrée du premier étage du registre à décalage 100. La sortie du septième étage du registre à décalage 100 est en outre reliée à l'entrée (+) d'un soustracteur 102 qui reçoit sur son entrée (−) la valeur 0,5 codée en binaire. La sortie du soustracteur 102 est reliée à une entrée d'un multiplicateur 103 qui reçoit sur son autre entrée la valeur −6 codée en binaire. La sortie du multiplicateur 103 est reliée à la ligne 34 (figure 1). La sortie du septième étage du registre à décalage 100 est aussi reliée à une entrée d'un multiplicateur 104 qui reçoit sur son autre entrée la valeur 3 codée en binaire. La sortie du multiplicateur 104 est reliée à la ligne 35 (figure 1). Le générateur de la figure 4 comprend en outre une porte ET 105 dont une entrée reçoit par une ligne 106 des impulsions à la cadence de signalisation 1/T fournies par le dispositif de récupération de chronologie 7. L'autre entrée de la porte ET 105 est reliée à la sortie d'une bascule à verrouillage 107 dont l'entrée est reliée à la ligne 43 (figure 1). La sortie de la porte ET 105 commande le décalage du registre à décalage 100.

En fonctionnement, le registre à décalage 100 est au préalable chargé avec la configuration de bits 0101010 (comme indiqué sur la figure) conformément à l'avis précité du CCITT. Le registre à décalage 100 peut être chargé par exemple sous la commande du détecteur de séquence de synchronisation 45. Lorsque l'instant de début de la séquence d'initialisation est détecté, un niveau haut apparaît sur la ligne 43 comme vu plus haut. Le passage au niveau haut de la ligne 43 enclenche la bascule 107 dont la sortie rend conductrice la porte ET 105 permettant ainsi aux impulsions de chronologie sur la ligne 106 d'être appliquées comme impulsions de décalage au registre à décalage 100. Le générateur de séquence de la figure 4 doit générer un symbole C toutes les fois qu'un bit 0 apparaît à la sortie du septième étage du registre à décalage 100 et un symbole D toutes les fois qu'un bit 1 apparaît à la sortie de ce septième étage. Conformément à l'avis V29 du CCITT, à la cadence de transmission de 9600 bits par seconde, les symboles C et D ont pour composantes en phase et en quadrature les valeurs suivantes:

$$C\ (+3,0) \qquad D\ (-3, +3)$$

La génération de ces composantes est obtenu au moyen du soustracteur 102 et des multiplicateurs 103 et 104. Si un bit "0" apparaît à la sortie du septième étage du registre à décalage 100, la valeur 0,5 lui est retranchée dans le soustracteur 102 qui fournit ainsi la valeur −0,5. Cette valeur est multipliée par la valeur −6 dans le multiplicateur 103 qui fournit ainsi la valeur +3 qui représente la composante en phase du symbole C. Le bit "0 à la sortie du septième étage du registre à décalage 100 est aussi multipliée par la valeur + dans le multiplicateur 104 qui fournit ainsi la valeur 0 qui représente la composante en quadrature du symbole C. On vérifiera que si un bit "1" apparaît à la sortie du septième étage du registre à décalage on obtient bien les valeurs −3 et +3 qui représentent les composantes en phase et en quadrature du symbole D à la sortie des multiplicateurs 103 et 104, respectivement.

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention.

### Revendications

1. Procédé de détection de l'instant de début d'une séquence pseudo-aléatoire de symboles dans un récepteur de données utilisant une modulation à double bande latérale-porteuses en quadrature, la séquence pseudo-aléatoire étant précédée par une autre séquence de symboles constituée par des alternances successives entre deux symboles, et les séquences étant telles que le début de la séquence pseudo-aléatoire crée une inversion de la phase des composantes du spectre de fréquence de la séquence d'alternances, caractérisé en ce qu'il comprend les étapes suivantes:
a) la démodulation du signal reçu,
b) la détermination de la composante continue du signal reçu démodulé,
c) la mesure de l'énergie de cette composante continue,
d) la mesure de la valeur moyenne de ladite énergie, et
e) la détection de l'instant où ladite énergie chute au-dessous de sa valeur moyenne, cet instant étant indicatif de l'instant de début de ladite seconde séquence.

2. Procédé selon la revendication 1, caractérisé en ce que la détermination de la composante continue du signal reçu démodulé est réalisée par le filtrage passe-bas du signal reçu démodulé.

3. Procédé selon l'une quelconque des revendications précédentes, caractérisé en ce que la chute d'énergie est détectée par détection de l'instant où cette énergie atteint sa valeur minimum.

4. Dispositif de mise en oeuvre du procédé selon l'une quelconque des revendications 1 à 3, caractérisé en ce qu'il comprend:
des moyens (11) de démodulation du signal reçu,
des moyens de filtrage passe-bas (50, 51) du signal reçu démodulé,
des premiers moyens de mesure (53, 55, 56) pour mesurer l'énergie du signal fourni par lesdits moyens de filtrage,
des seconds moyens de mesure (58) pour mesurer la valeur moyenne de ladite énergie, et
des moyens (59—65) de détection de l'instant où cette énergie chute au-dessous de sa valeur moyenne.

0 012 884

5. Dispositif selon la revendication 4, caractérisé en ce que les moyens de démodulation fournissent les composantes en phase et en quadrature du signal reçu démodulé, et en ce que les moyens de filtrage sont constituées par des premiers (50) et seconds (51) moyens de filtrage passe-bas destinés à filtrer respectivement les composantes en phase et en quadrature du signal reçu démodulé.

6. Dispositif selon la revendication 5, caractérisé en ce que lesdits premiers moyens de mesure comprennent:

des premiers moyens de multiplication (53) pour multiplier par elle-même la sortie desdits premiers moyens de filtrage,

des seconds moyens de multiplication (55) pour multiplier par elle-même la sortie desdits seconds moyens de filtrage, et

des moyens (56) pour sommer les sorties desdits premiers et seconds moyens de multiplication.

7. Dispositif selon la revendication 5, utilisé dans un récepteur comprenant un égaliseur (14) qui comprend au moins deux filtres transversaux (70, 72—74, 84 et 71, 78—80, 86), couplés aux sorties (15, 16) de l'égaliseur, caractérisé ce qu'il comprend des moyens (89, 91) pour découpler les filtres transversaux des sorties de l'égaliseur, et en ce que lesdits premier et second moyens de filtrage sont constitués par lesdits deux filtres transversaux de l'égaliseur.

## Patentansprüche

1. Verfahren zum Erkennen der Anfangszeit einer Pseudozufallsfolge von Symbolen in einem Datenempfänger, der mit Zweiseitenband-Quadraturmodulation arbeitet, wobei der Pseudozufallsfolge eine andere Folge von Symbolen vorangeht, die aus aufeinanderfolgenden Wechseln zwischen zwei Symbolen besteht, und die Folgen so gestaltet sind, daß der Anfang der Pseudozufallsfolge eine Phasenumkehr der Komponenten des Frequenzspektrums der Wechselfolge bewirkt, dadurch gekennzeichnet, daß es folgende Schritte einschließt:

a) die Demodulation des erhaltenen Signals,

b) die Bestimmung der Gleichstromkomponenten des erhaltenen, demodulierten Signals,

c) das Messen dieser Gleichstromkomponenten,

d) das Messen des Durchschnittswertes dieser Energie, und

e) das Feststellen des Zeitpunktes, bei dem diese Energie unter ihren Durchschnittswert sinkt, wobei dieser Zeitpunkt die Anfangszeit der zweiten Folge angibt.

2. Verfahren nach Anspruch 1, dadurch gekennzeichnet, daß die Gleichstromkomponente des erhaltenen, demodulierten Signals durch Tiefpaßfilterung des erhaltenen, demodulierten Signals bestimmt wird.

3. Verfahren nach einem der vorhergehenden Ansprüche, dadurch gekennzeichnet, daß der Energieabfall durch Bestimmen des Zeitpunktes, bei dem diese Energie ihren Tiefstwert erreicht, erkannt wird.

4. Vorrichtung zum Durchführen des Verfahrens nach einem der Ansprüche 1 bis 3, dadurch gekennzeichnet, daß sie einschließt:

Mittel (11) zum Demodulieren des erhaltenen Signals,

Mittel (50, 51) zur Tiefpaßfilterung des erhaltenen, demodulierten Signals,

erste Meßmittel (53, 55, 56) zum Messen der Energie des von diesen Filtermitteln gelieferten Signals, zweite Meßmittel (58) zum Messen des Durchschnittswertes dieser Energie, und

Mittel (59—65) zum Feststellen des Zeitpunktes, bei dem diese Energie unter ihren Durchschnittswert sinkt.

5. Vorrichtung nach Anspruch 4, dadurch gekennzeichnet, daß die Demodulationsmittel die Inphasen- und Quadraturkomponenten des erhaltenen, demodulierten Signals liefern, und die Filtermittel aus ersten (50) und zweiten (51) Tiefpaßfiltermitteln bestehen, die dazu bestimmt sind, die Inphasen- bzw. die Quadraturkomponenten aus dem erhaltenen, demodulierten Signal zu filtern.

6. Vorrichtung nach Anspruch 5, dadurch gekennzeichnet, daß die ersten Meßmittel einschließen:

erste Multiplikationsmittel (53) zum Multiplizieren mit sich selbst der Ausgabe der ersten Filtermittel, zweite Multiplikationsmittel (55) zum Multiplizieren mit sich selbst der Ausgabe der zweiten Filtermittel, und

Mittel (56) zum Summieren der Ausgaben dieser ersten und zweiten Multiplikationsmittel.

7. Vorrichtung nach Anspruch 5, zur Benutzung in einem Empfänger mit einem Ausgleicher (14), der wenigstens zwei mit den Ausgängen (15, 16) des Ausgleichers verbundene Transversalfilter (70, 72—74, 84 und 71, 78—80, 86) besitzt,

dadurch gekennzeichnet, daß sie Mittel (89, 91) zum Entkoppeln der Transversalfilter von den Ausgängen des Ausgleichers einschließt, und die ersten und zweiten Filtermittel von diesen zwei Transversalfiltern des Ausgleichers gebildet werden.

## Claims

1. A method for detecting the start time of a pseudo-random sequence of symbols in a data receiver using double sideband quadrature carrier modulation, the pseudo-random sequence being

9

0012884

preceded by another symbol sequence made up of successive alternations between two symbols, and the sequences being such that the beginning of the pseudo-random sequence initiates a phase reversal of the components of the frequency spectrum of the alternation sequence, characterized in that it includes the steps of:

a) demodulating the received signal,
b) determining the DC component of the received, demodulated signal,
c) measuring the energy of this DC component,
d) measuring the mean value of said energy, and
e) detecting the time at which said energy drops below its mean value, said time indicating the start time of said second sequence.

2. A method according to claim 1, characterized in that the DC component of the received, demodulated signal is determined by low-pass filtering of the received, demodulated signal.

3. A method according to any one of the preceding claims, characterized in that the energy drop is detected by detecting the time at which this energy reaches its minimum value.

4. A device for implementing the method according to any one of claims 1 to 3, characterized in that it comprises:

means (11) for demodulating the received signal,
means for low-pass filtering (50, 51) the received, demodulated signal,
first measuring means (53, 55, 56) for measuring the mean value of said energy, and
second measuring means (58) for measuring the mean value of said energy, and
means (59 to 65) for detecting the time at which this energy drops below its mean value.

5. A device according to claim 4, characterized in that the demodulation means supply the in-phase and quadrature components of the received, demodulated signal, and the filtering means are made up by first (50) and second (51) low-pass filtering means for filtering respectively the in-phase and quadrature components of the received, demodulated signal.

6. A device according to claim 5, characterized in that said first measuring means include:
first multiplication means (53) for multiplying the output of said first filtering means by itself,
second multiplication means (55) for multiplying the output of said second filtering means by itself, and
means (56) for summing the outputs of said first and second multiplication means.

7. A device according to claim 5, used in a receiver comprising an equalizer (14) with at least two transversal filters (70, 72—74, 84 and 71, 78—80, 86) coupled to the outputs (15, 16) of the equalizer, characterized in that it comprises means (89, 91) for disconnecting the transversal filters from the equalizer outputs, and said first and second filtering means are made up by said two transversal filters of the equalizer.

10

FIG.1

**FIG. 2**

**FIG. 4**

FIG.3